# EUROPÄISCHE PATENTANMELDUNG

(11) **EP 1 346 796 A2**
(43) Veröffentlichungstag der Anmeldung: **24.09.2003**
(21) Anmeldenummer: 03006030.5
(22) Anmeldetag: 19.03.2003
(51) Int. Cl.: B23Q 39/02

(54) **Vorrichtung zur mehrseitigen Bearbeitung von Hohlprofilen**

(30) Priorität: 19.03.2002 DE 10212210
(71) Anmelder: Eisenbach, Bernhard, D-65611 Brechen (DE)
(72) Erfinder: Eisenbach, Bernhard, D-65611 Brechen (DE)
(74) Vertreter: Müller, Eckhard, Dr.

(57) **Zusammenfassung**

- Anmelder:: Bernhard Eisenbach
Taunusstraße 24
D-65611 Brechen
- Bezeichnung:: Vorrichtung zur mehrseitigen Bearbeitung von Hohlprofilen

Zusammenfassung

Es handelt sich um eine Vorrichtung zum mehrseitigen Bearbeiten von Hohlprofilen (1) oder dergleichen stabförmigen Werkstücken mittels wenigstens einer an einem Maschinengestell (3) verfahrbaren Bearbeitungseinheit (2), mit einer in dem Maschinengestell (3) gelagerten Aufspanneinrichtung (8) für das zu bearbeitende Hohlprofil (1), wobei gegebenenfalls die Aufspanneinrichtung (8) um eine parallel zur Längsachse des Hohlprofils (1) verlaufende Schwenkachse (13) schwenkbar gelagert ist. Für eine schnelle Bearbeitung ist vorgesehen, dass zwei oder mehr Bearbeitungswerkzeuge (2, 21) in einem seitlichen Abstand neben- oder übereinander angeordnet sind (Fig. 1).

## Beschreibung

Die Erfindung betrifft eine Vorrichtung zur mehrseitigen Bearbeitung von Hohlprofilen oder dergleichen stabförmigen Werkstücken mittels wenigstens einer an einem Maschinengestell verfahrbaren Bearbeitungseinheit, mit einer in dem Maschinengestell gelagerten Aufspanneinrichtung für das zu bearbeitende Hohlprofil, wobei gegebenenfalls die Aufspanneinrichtung im Maschinengestell um eine parallel zur Längsachse des Hohlprofils verlaufende Drehachse drehbar gelagert ist.

Die Herstellung von Bohrungen und profilierten Durchbrüchen an Hohlprofilen, bspw. zur Aufnahme von Schlössern und Beschlägen für Fenster- und Türrahmen, erfolgt üblicherweise entweder durch spanabhebende Bearbeitung, nämlich Bohren und Fräsen, oder durch Plasmaschneiden.

Eine Vorrichtung zur mehrseitigen Bearbeitung von Hohlprofilen ist bereits aus der EP-A-0 558 982 bekannt. Um eine stabile Aufspannmöglichkeit für das Hohlprofil und eine gute Zugänglichkeit des Bearbeitungsbereichs zu gewährleisten, weist die Aufspanneinrichtung zwei im Abstand zueinander angeordnete, starr miteinander verbundene Stirnscheiben auf. Jede Stirnscheibe besitzt eine sich mindestens bis zur Scheibenmitte erstreckende Aussparung zur Aufnahme des Hohlprofils und bildet an ihrem Umfang eine sich über einen Bogenwinkel von annähernd 270° erstreckende, konzentrisch zur Schwenkachse verlaufende Kreisbogenführung, mittels welcher die Stirnscheiben im Maschinengestell gelagert sind. Durch diese Ausführungsform ist erreicht, dass das zu bearbeitende Hohlprofil im Bereich zwischen den beiden Stirnscheiben für die Bearbeitungseinheit weitestgehend frei zugänglich ist, so dass in allen Schwenkstellungen alle erforderlichen Seitenflächen bearbeitet werden können.

Aus der EP 787 560 A1 ist eine Vorrichtung zum Bearbeiten von Profilen bekannt, die eine an einem Maschinengestell verfahrbare Bearbeitungseinheit mit einer in dem Maschinengestell gelagerten Aufspanneinrichtung für das zu bearbeitende Hohlprofil aufweist. Die Aufspanneinrichtung ist um eine parallel zur Längsachse des Hohlprofils verlaufende Schwenkachse schwenkbar gelagert und in mindestens drei unterschiedlichen Schwenklagen arretierbar, die um je 90° gegeneinander verdreht sind, um drei Seiten des Profils bearbeiten zu können. Beim Verschwenken um 90° oder 180° verschiebt sich der Ort des Profils, so dass das Bearbeitungswerkzeug an eine andere Stelle geführt werden muss, was zu einem längeren Verfahren in Querrichtung führt.

Aus der EP 934 800 A1 ist eine Vorrichtung zur mehrseitigen Bearbeitung von Hohlprofilen oder dergleichen stabförmigen Werkstücken mittels wenigstens einer an einem Maschinengestell verfahrbaren Bearbeitungseinheit mit einer in dem Maschinengestell gelagerten Aufspanneinrichtung für das zu bearbeitende Hohlprofil bekannt, wobei die Aufspanneinrichtung im Maschinengestell um eine parallel zur Längsachse des Hohlprofils verlaufende Schwenkachse schwenkbar gelagert ist. Diese Vorrichtung bildet den Oberbegriff des Anspruchs 1. Auch bei dieser bekannten Vorrichtung ist als Bearbeitungswerkzeug ein Fräskopf mit vertikaler Fräsachse vorgesehen. Will man auf der gleichen Seite des Werkstücks sowohl Fräsen als auch Bohren, vielleicht sogar mit unterschiedlichen Durchmessern, so muss das Werkzeug (und eventuell auch die Schablone) gewechselt werden, was zeitaufwendig ist.

Hinlänglich bekannt sind auch Fräsmaschinen mit Werkzeugwechslern, wobei das Wechseln der Werkzeuge jedoch sehr zeitraubend ist und sich die Taktzeit zur Bearbeitung des Werkstückes entsprechend verlängert. Häufig dauert das Wechseln des Werkzeuges sogar länger als das eigentliche Bearbeiten. Dies trifft an sich in gleicher Weise auch für die Vorrichtung nach der DE 42 37 931 A1 zu, bei welcher zwar kein Werkzeugwechsel stattfindet, jedoch das Drehen des revolverförmigen Werkzeugkopfes zu einer langen Taktzeit führt.

Auf einem anderen Gebiet der Technik, nämlich dem der Drehbänke, ist aus der US 4,308,771 eine Vorrichtung zum Bearbeiten von in einem Futter eingespannten, sich drehenden Werkstücken bekannt, bei der mehrere Bearbeitungswerkzeuge in seitlichem Abstand zueinander angeordnet sind. Diese Bohrer oder Fräser sind drehfest gehalten und tauchen nacheinander in das sich drehende Werkstück ein. Mit dieser Vorrichtung können nur die Stirnseiten der Werkstücke bearbeitet werden. Auch sind die Werkzeuge nur seitlich in einer Richtung verfahrbar.

Auf dem Gebiet des Schleifens optischer Linsen ist es aus der DE 100 29 967 A1 bekannt, zwei Werkzeuge an einem gemeinsamen Träger so anzuordnen, dass sie nacheinander die gleiche Linse bearbeiten können.

Aufgabe der Erfindung ist es, eine Vorrichtung der eingangs genannten Art anzugeben, mit der schneller unterschiedliche Bearbeitungsschritte auf der gleichen Seite des Werkstücks durchgeführt werden können.

Diese Aufgabe wird gelöst von einer Vorrichtung mit den kennzeichnenden Merkmalen des Anspruchs 1. Ausführungen der Erfindung sind Gegenstände von Unteransprüchen.

Erfindungsgemäß sind zwei oder mehr Bearbeitungswerkzeuge in einem seitlichen Abstand nebeneinander angeordnet, der so groß ist, dass beim Eintauchen eines Werkzeugs in das Hohlprofil die anderen Werkzeuge das Hohlprofil nicht berühren. Mehrere Bearbeitungsschritte mit unterschiedlichen Geräten können so ohne Umspannen des Werkstücks oder der Werkzeuge, also wesentlich schneller als bisher, durchgeführt werden. So kann neben einer Fräse ein Bohrer angeordnet sein, um in einem zweiten Bearbeitungsschritt Befestigungsbohrungen für den Schloßstulp, Schieber oder Schlüsselschilder einzubringen. Während eines der Werkzeuge in das Hohlprofil eintaucht und es bearbeitet, taucht das zweite frei daneben "in die Luft", da ihr gegenseitiger Abstand groß genug ist, um das Hohlprofil nicht zu berühren. Die Erfindung erlaubt ein sehr schnelles Bearbeiten, da sonst notwendige Umspannarbeiten entfallen und nur kurze Verfahrwege anfallen. Unterschiedliche Fräswerkzeuge oder unterschiedlich starke Bohrer sind bereits fertig eingespannt und stehen in direkter Nähe zum Einsatzort arbeitsbereit.

Beim Bearbeiten von Breitseiten empfiehlt sich ein Abstand, der größer ist als die Profilbreite des Hohlprofils oder größer als diese plus die Werkzeugstärke. Dann kann überall auf der Fläche gefräst oder gebohrt werden. Beim Bearbeiten von schmalen Seiten reicht ein entsprechend kleinerer Abstand. Würde man nur die Mitte eines Werkstücks bearbeiten, würde die halbe Werkstückbreite als Abstand reichen.

Für die Bearbeitung von stabförmigen Hohlprofilen kann sich der an sich bekannte konstruktive Aufbau der Aufspanneinrichtung empfehlen mit wenigstens zwei Spannelementen für das zu bearbeitende Werkstück, welche drehbar an mit dem Maschinengestell verbundenen Haltearmen gelagert und in unterschiedlichen Schwenklagen arretierbar sind, bevorzugt in drei um je 90° verschwenkten Lagen, so dass drei Seiten eines Hohlprofils bearbeitbar sind. Durch die Lagerung der Spannelemente nahe am Maschinengestell bleibt eine günstige Anordnung der Drehachse erhalten, so dass die Seitenflächen des Werkstückes in einfacher Weise mit kurzen Verfahrwegen der Bearbeitungseinheit bearbeitet werden können.

Die mehreren Werkzeuge sind bevorzugt an einem einzigen, gemeinsamen Träger befestigt. Damit reicht eine gemeinsame Führung, insbesondere eine zum Wechseln der jeweils zum Einsatz kommenden Werkzeuge mit exakter Führung aller Werkzeuge zu allen zu bearbeitenden Stellen des Werkstücks und zum Verfahren aller Werkzeuge am Werkstück. Die aufwendigsten Bauteile müssen so nur einmal vorhanden sein. Bei entsprechender Auslegung kann auch die gleiche Schablone für mehrere Arbeitsschritte verwendet werden, was auch insoweit ein Wechseln erspart.

Grundsätzlich empfiehlt sich eine Schablonensteuerung für eine Vorrichtung mit bis zu zwei Bearbeitungswerkzeugen. Für mehrere hintereinander angeordnete Bearbeitungswerkzeuge ist nach der Erfindung eine Mehrachssteuerung vorgesehen.

Nach einer vorteilhaften Ausführungsform sind die Achsen der Bearbeitungswerkzeuge horizontal ausgerichtet und die Werkzeuge in einer Reihe übereinander angeordnet. Hierdurch wird ein kompakter Aufbau der Maschine erreicht, so dass eine schallhemmende Kapselung für die gesamte Maschine möglich ist. Die horizontale Anordnung hat auch den Vorteil, dass feinfühliger gearbeitet werden kann, da beim Eintauchen und beim Herausziehen der Werkzeuge genau die Kraft wirkt, die der Benutzer aufbringt.
Die Bearbeitungswerkzeuge können je einen getrennten Antrieb haben, wie dies aus dem Stand der Technik bekannt ist. Fräser oder Bohrer mit einem eigenen Antrieb, zum Beispiel einem Elektromotor, sind im Stand der Technik hinlänglich bekannt. Mit dem Preisverfall der elektrischen Antriebe sind solche Lösungen interessant geworden, haben aber den Nachteil eines relativ hohen Gesamtgewichts der zu verschiebenden Einheit. Auch kann die Gesamtabmessung bei Verwendung größerer Motoren recht groß werden, da die Abstände dann von den Motordurchmessern und nicht mehr von der Rahmenbreite vorgegeben werden.

In einer besonders vorteilhaften Ausführungsform werden deshalb die einzelnen Bearbeitungswerkzeuge mittels eines einzähligen Antriebs von einem Motor gemeinsam angetrieben, der sein Drehmoment über Riemen, Ketten, Zahnräder oder sonstige Getriebe weitergibt. Bevorzugt wird ein Riemenantrieb mit Spannrollen und Umlenkrollen eingesetzt. So kann das Stabprofil mit unterschiedlichen Bearbeitungswerkzeugen bearbeitet werden kann, ohne dass ein Werkzeugwechsel vorgenommen werden muss. Es reicht allein eine mechanische Verschiebung auf den bereits vorhandenen Schlitten, bis das jeweilige Bearbeitungswerkzeug bei vertikaler Werkzeuganordnung über und bei horizontaler Anordnung neben dem zu bearbeitenden Profil steht. Beim Eintauchen des Bearbeitungswerkzeugs berühren die übrigen nicht zum Einsatz kommenden Bearbeitungswerkzeuge aufgrund der vorgegebenen Beabstandungen das Profil nicht. Ein gemeinsamer Antrieb hat den Vorteil, dass die Aufnahmen für die Bohrer oder Fräser nicht größer und schwerer als Spannfutter sein müssen. Das Gesamtgewicht und die Gesamtabmessung des vom Benutzer bewegten Teils bleiben so relativ klein, was die Beweglichkeit und die Arbeitsgeschwindigkeit erhöht. Im Falle eines Riemenantriebes empfiehlt es sich nach der Erfindung, die für jede Werkzeugwelle beziehungsweise für jedes Werkzeug erforderliche Drehzahl durch im Durchmesser unterschiedliche Riemenscheiben einzustellen.

Von besonderem Vorteil ist es dabei, wenn die Achsen der Bearbeitungswerkzeuge horizontal angeordnet sind, weil dann der Verschleiß des Riemenantriebs wesentlich reduziert ist. Der Riemen erfährt keine belastende Seitenkraft und liegt daher nicht mit einer Seite auf den Bordscheiben der Antriebsrollen oder der Umlenkrollen an, was die Lebensdauer deutlich erhöht.

Ein weiterer Vorteil der Anordnung der Fräswerkzeuge mit horizontaler Achse ist, dass die Lagerung wesentlich stabiler ist, da der ganze Schlitten mit den Bearbeitungswerkzeugen senkrecht verfahren werden kann und es zu keinen von der Schwerkraft induzierten Kippbewegungen kommt. Die senkrechte Verfahrbarkeit unterscheidet die Erfindung auch von der EP 787 560 A1.

Nach einer weiteren vorteilhaften Ausführung der Erfindung kann es vorgesehen sein, dass die Schwenkachse in mindestens zwei um 180° gegeneinander verdrehten Schwenklagen arretierbar und so angeordnet ist, dass das Hohlprofil in den beiden um 180° gegeneinander verdrehten Schwenklagen in der gleichen Bearbeitungsachse liegt. Dadurch wird erreicht, dass bei der Bearbeitung gegenüberliegender Seiten eines Hohlprofils kein seitlicher Versatz auftritt. Die Bearbeitungsachse der ersten Seite fällt mit der der ihr gegenüberliegenden Seite zusammen. Anders ausgedrückt ist der seitliche Abstand des Fräsers von der Schablone, wenn die erste Seite des Profils eingespannt ist, gleich dem Abstand, wenn die dritte - gegenüberliegende - Seite eingespannt ist. So können beispielsweise die Fräsungen für durchgehende Drückerlöcher exakter miteinander fluchten. Auch muss auf der Kopierschablone nur ein einziges Fräsbild vorhanden sein, das beide Male exakt in genau gleiche Fräsungen abgebildet wird. Fräsungen von beiden Seiten fluchten so exakt und erzeugen ein durchgehendes, stufenfreies Loch.

Zum Erreichen dieser Koaxialität liegt die Schwenkachse bei vertikal angeordneter Bearbeitungseinheit unter dem Hohlprofil und bei horizontal angeordneter Bearbeitungseinheit horizontal neben dem Hohlprofil. Die Achse des Bearbeitungswerkzeugs fällt damit mit der Achse der Aufnahme oder des Profils zusammen. Die Achse des Fräsers stimmt also mit dem Drehpunkt überein, so dass das durchgehende Loch - für den Schließzylinder oder für den Drücker - von beiden Seiten aus einer einzigen Frässchablone oder einer im Falle einer 3-Achsensteuerung in einer einzigen Stellung der Steuerung durchgeführt werden kann. Beide Bohrungen oder Fräsungen fluchten exakt miteinander, was die Präzision der Bohrung erhöht und die Einbringung der Komponenten erleichtert. Die vertikale Anordnung der Fräswerkzeuge ist die bisher übliche, wobei die horizontale Anordnung jedoch ihre besonderen Vorzüge hat. Durch die erfindungsgemäß erreichten sehr kurzen Verfahrwege wird die Bearbeitungsgeschwindigkeit nochmals erhöht.

Bei dieser Ausführung der Erfindung geht das jeweils zum Einsatz kommende Bearbeitungswerkzeug mit seiner Bearbeitungsachse durch die Schwenkachse der Aufspannvorrichtung. Dies kann beispielsweise durch eine dem jeweiligen Bearbeitungswerkzeug zugeordnete Justierbohrung auf der Kopierschablone für den jeweiligen Kopierbolzen realisiert sein. Wenn der Kopierbolzen in die Justierbohrung eintaucht, ist sichergestellt, dass die Bearbeitungsachse des jeweils ausgewählten Bearbeitungswerkzeugs durch die Schwenkachse der Aufspanneinrichtung geht. Hierdurch ist es möglich, bei einer Bearbeitung von jeweils gegenüberliegenden Seiten exakt miteinander fluchtende Aussparungen und dergleichen zu erzeugen.

Da erfindungsgemäß für ein von zwei Seiten aus einzubringendes Loch nur noch ein einziges Fräsbild vorhanden sein muss, das für die Bearbeitung der beiden gegenüberliegenden Seiten den Fräser führen kann, kann eine kleinere Schablone verwendet werden oder es ist Platz auf der Schablone für weitere Fräsbilder frei. So kann nach einer Ausführungsform der Erfindung die Schablone, die das Fräsbild für das Drückerloch und die Ausnehmung für den Profilzylinder enthält, auch noch das Fräsbild für den um 90° versetzten Schlosskasten enthalten. Die Kopierschablone weist also neben dem Fräsbild für das Drückerloch und die darunter angeordnete Ausnehmung für den Schließzylinder (welches für die beiden um 180° versetzten, aber erfindungsgemäß auf der gleichen Bearbeitungslinie stattfindenden Fräsungen als Vorbild dient) mit etwas seitlichem Versatz das Fräsbild für den Schlosskasten auf (als Vorbild für die um 90° dagegen versetzte Fräsung). Der seitliche Versatz ist für die meisten Profile genormt und gleich.

Wie bereits oben ausgeführt, wird bei mehreren Werkzeugen anstelle einer Kopierschablone eine Mehrachssteuerung eingesetzt, welche sich bereits im Falle von drei Bearbeitungswerkzeugen empfiehlt.

Die erfindungsgemäße Lehre, die Drehachse geschickt anzuordnen, kann auch unabhängig von den zuerst genannten Lehren, mehrere Bearbeitungswerkzeuge in seitlichem Abstand linear neben- oder übereinander anzuordnen, realisiert werden.

Selbstverständlich ist es möglich, dass die Aufspanneinrichtung auch mindestens eine Raststellung für eine Schrägstellung des Hohlprofils hat. Die Aufnahme mit dem zu bearbeitenden Hohlprofil kann dann so verschwenkt arretiert werden, dass in das schräggestellte Profil schräg verlaufende Ausnehmungen, wie zum Beispiel Wasserschlitze, eingearbeitet werden können.

Ein weiterer Vorteil der erfindungsgemäßen Anordnung ist, dass die Bearbeitungswerkzeuge bei der Bearbeitung in einer Richtung verfahren werden, wie auch der Verfahrweg zum Auswählen der einzelnen Bearbeitungswerkzeuge, so dass insoweit auf die Führungen zurückgegriffen bzw. die bereits vorhandene senkrechte Achse für die Stabbearbeitung für den Werkzeugwechsel mitbenutzt werden kann.

Aufgrund der kompakten Bauweise der erfindungsgemäßen Vorrichtung ist eine effektive schalldämmende Kapselung ermöglicht, wobei das Einlegen und Herausnehmen des Werkstückes beispielsweise durch Öffnen und Schließen einer Klappe problemlos durchgeführt werden kann. Bei der erfindungsgemäßen Vorrichtung ist ihre Breite praktisch nur durch den Verfahrweg der Bearbeitungswerkzeuge in horizontaler Richtung und die Höhe der Vorrichtung durch den vertikalen Verfahrweg der Bearbeitungswerkzeuge vorgegeben. Demgegenüber gestaltet sich die Kapselung beim Stand der Technik aufgrund der großen Verfahrwege und der damit verbundenen Dimensionen der Maschinen sehr schwierig, insbesondere die Handhabung des Werkstückes.

Anstelle von Hohlprofilen können auch andere Werkstücke mit der erfindungsgemäßen Vorrichtung bearbeitet werden. Möglich ist zum Beispiel das Bearbeiten von Stäben aus dünnwandigem Material, von Rohren oder von Abkantprofilen.

Weitere Ziele, Vorteile, Merkmale und Anwendungsmöglichkeiten der vorliegenden Erfindung ergeben sich aus den nachfolgenden Beschreibungen von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine Stirnansicht einer möglichen Ausführungsform einer erfindungsgemäßen Vorrichtung in einer ersten Schwenkstellung der Aufspanneinrichtung,
- Fig. 2: eine Draufsicht auf die Vorrichtung gemäß Figur 1,
- Fig. 3: eine Seitenansicht der Vorrichtung gemäß Figur 1,
- Fig. 4 und 5: eine Stirnansicht einer erfindungsgemäßen Vorrichtung in einer ersten Schwenkstellung,
- Fig. 6 und 7: eine Stirnansicht der gemäß Figuren 1 und 2 Vorrichtung in einer zweiten Schwenkstellung,
- Fig. 8 und 9: eine Stirnansicht der erfindungsgemäßen Vorrichtung gemäß Figuren 1 und 2 in einer dritten Schwenkstellung,
- Fig. 10: eine ausschnittsweise Stirnansicht einer weiteren Ausführungsform einer erfindungsgemäßen Vorrichtung mit einer Mehrachsensteuerung,
- Fig. 11: einen Draufblick auf die Ausführungsform der Fig. 10.
- Fig. 12: eine weitere Ausführungsform der Erfindung im Draufblick und
- Fig. 13: eine Stirnansicht der Ausführungsform gemäß Fig. 12.

Die in den Figuren dargestellten Vorrichtungen dienen zur Bearbeitung eines Hohlprofils 1, bspw. für die Herstellung von Tür- oder Fensterrahmen oder auch eines stabförmigen Werkstückes. Dabei sollen in drei jeweils im rechten Winkel zueinander liegende Seitenflächen des Hohlprofils 1, das bspw. aus Aluminium besteht, Durchbrüche gefräst oder Löcher gebohrt werden. Selbstverständlich ist es aber auch möglich, mittels der erfindungsgemäßen Vorrichtungen die Bearbeitung von Rahmenecken von Fenster- oder Türrahmen durchzuführen.

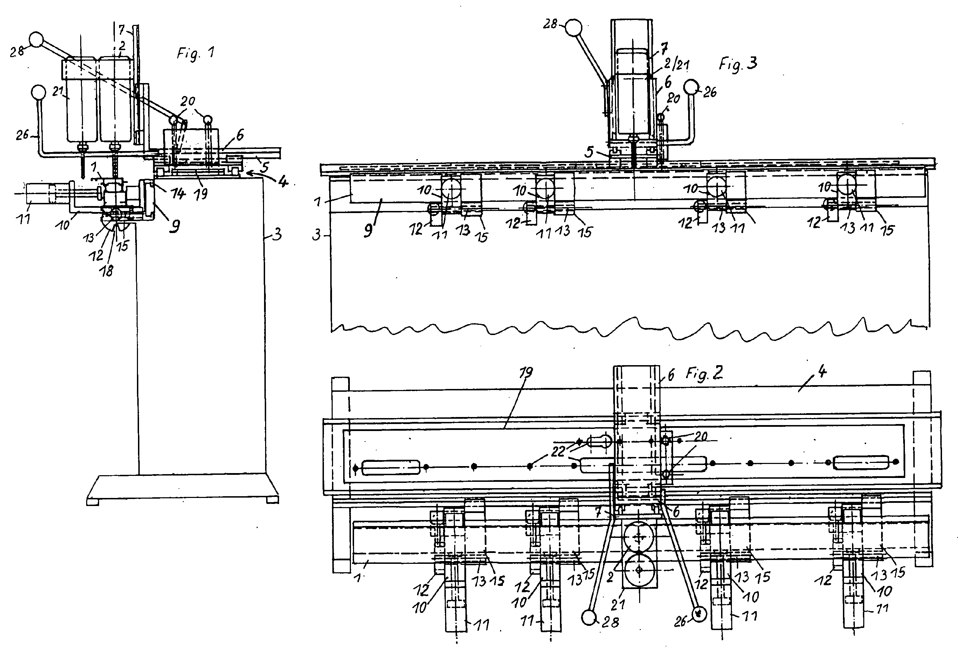

Gemäß Fig. 1 bis 3 ist als Bearbeitungseinheit 2 ein Fräskopf mit vertikaler Fräsachse und ein Bohrer 21, ebenfalls mit vertikaler Achse, vorgesehen. Beide sind an einem gemeinsamen Gestell befestigt und können gemeinsam in allen drei Dimensionen bewegt werden. Dazu weist die Vorrichtung ein Maschinengestell 3 auf mit einer Fräsbank 4, auf welcher ein Längssupport 5 verfahrbar ist. Auf dem Längssupport 5 ist ein Quersupport 6 gelagert, an welchem wiederum ein den Fräskopf 2 haltender Tiefensupport 7 verfahrbar ist.

Selbstverständlich sind auch andere Führungen denkbar, die eine Verfahrbarkeit in drei Achsen (vor-hinter, links-rechts, rauf-runter) erlauben.

Zur Aufnahme des stabförmigen Hohlprofils 1 sind bei dem hier gewählten Ausführungsbeispiel vier Spannelemente 10 vorgesehen, welche unabhängig voneinander an einer an der Fräsbank 4 bzw. dem Maschinengestell 3 angeordneten Schiene 9 in Längsrichtung verschiebbar sind. Die Spannelemente 10 sind bei dem hier gewählten Ausführungsbeispiel u-förmig ausgebildet und weisen Spannzylinder 11 auf. Die Spannelemente 10 sind jeweils mit einer Rastscheibe 12 verbunden, deren Drehachse 13 an einem mit einer Konsole 14 verbundenen, etwas auskragenden Haltearm 15 gelagert ist. Die Konsolen 14 sind über U-förmige Führungen an der Schiene 9 längsverschieblich gehalten. Weiterhin sind Rastelemente vorgesehen, die in drei um 90° gegeneinander versetzt angeordnete Aussparungen 18 der Rastscheibe 12 in Eingriff gebracht werden können und so das Profil 1 in mindestens drei unterschiedlichen Schwenklagen (0°, 90°, 180°) arretieren können. Selbstverständlich sind auch andere beliebige Winkeleinteilungen möglich. Bei Sechskantprofilen empfehlen sich Rastungen im 60° Abstand.

Die Bearbeitungseinheiten oder -werkzeuge 2 und 21 können mit dem Betätigungshebel 26 hin- und hergeschoben werden. Insbesondere werden sie über die Stelle des Profils 1 verschoben, an der eine Ausfräsung oder Bohrung erfolgen soll. Die genaue Stelle wird von der Schablone 19 vorgegeben, in deren Ausnehmung 22 einer der beiden Kopierstifte 20 eingreifen kann. Liegt ein Kopierstift 20 genau über einer Aussparung 22 der Schablone 19, kann der Benutzer die Bearbeitungseinheiten 2 und 21 mittels des Betätigungshebels 28 absenken, wodurch das Fräswerkzeug in das Profil eintaucht und ein Loch fräst. Durch leichtes Längs- und Querverschieben des Kopierstifts 20 in der dem Fräsbild entsprechenden Aussparung 22 in der Schablone 19 wird auch der Fräser längs und seitlich bewegt und erzeugt die gewünschte Ausnehmung im Profil 1.

Wie in Fig. 1 gut zu erkennen ist, kann durch Auf- und Abbewegen der gemeinsamen Halterung der Werkzeuge 2 und 21 am Tiefensupport 7 entweder der Fräskopf 2 oder der Bohrer 21 in das Profil 1 eingetaucht und wieder herausgezogen werden. Die Verfahrwege zum Wechseln sind sehr kurz. Ein Umspannen des Profils 1 ist nicht notwendig. In der Ausführung der Fig. 1 bis 3 haben die beiden Werkzeuge 2 und 21 je einen eigenen Antrieb, bei dem hier gewählten Ausführungsbeispiel je einen eigenen Elektromotor. Möglich ist auch der Einsatz anderer Antriebe, wie Druckluft- oder Hydraulikmotoren. Selbstverständlich können auch drei, vier oder mehr Werkzeuge an einer gemeinsamen Führung angeordnet sein.

Die Drehachse 13 ist für das Verschwenken des aufgespannten Hohlprofils 1 exakt unter dem Hohlprofil 1 angeordnet, was dazu führt, dass bei seinem Verschwenken um 180° das Profil 1 wieder exakt unter dem Fräswerkzeug 2, also auf der gleichen Bearbeitungslinie oder -achse liegt. Daher kann das gleiche Fräsbild auf der Schablone 19 auch für die entgegengesetzte Seite des Profils 1 verwendet werden. So werden von beiden Seiten exakt die gleichen Ausnehmungen gefräst.

Um sicherzustellen, dass das jeweils zum Einsatz kommende Bearbeitungswerkzeug 32, 34, 36, 38 mit seiner Bearbeitungsachse durch die Schwenkachse 13 der Aufspanneinrichtung 8 geht, kann auf der Schablone 19 eine dem jeweiligen Bearbeitungswerkzeug 32, 34, 36, 38 zugeordnete (nicht dargestellte) Justierbohrung für den jeweils zum Einsatz kommenden Kopierstift 20 vorgesehen sein. Hierdurch ist gewährleistet, dass bei einer Bearbeitung von jeweils gegenüberliegenden Seiten des zu bearbeitenden Hohlprofils 1 exakt miteinander fluchtende Aussparungen erzeugt werden.

Bei den hier gewählten Ausführungsbeispielen ist eine Betätigung der Supporte 5 bis 7 mittels der Handhebel 26 und 28 vorgesehen, wobei die in Schablonen 19 enthaltenen Aussparungen 22 bzw. Fräsbilder (für die Aufnahmen von Schlössern oder Beschlägen für Fenster- und Türrahmen) mittels eines der Kopierstifte 20 auf die zu bearbeitenden Hohlprofile 1 übertragen werden.

Selbstverständlich ist es auch möglich, die Betätigung der Schlitten über eine CNC-Steuerung vorzunehmen, wobei dann Kopierschablonen und -stifte entfallen können.

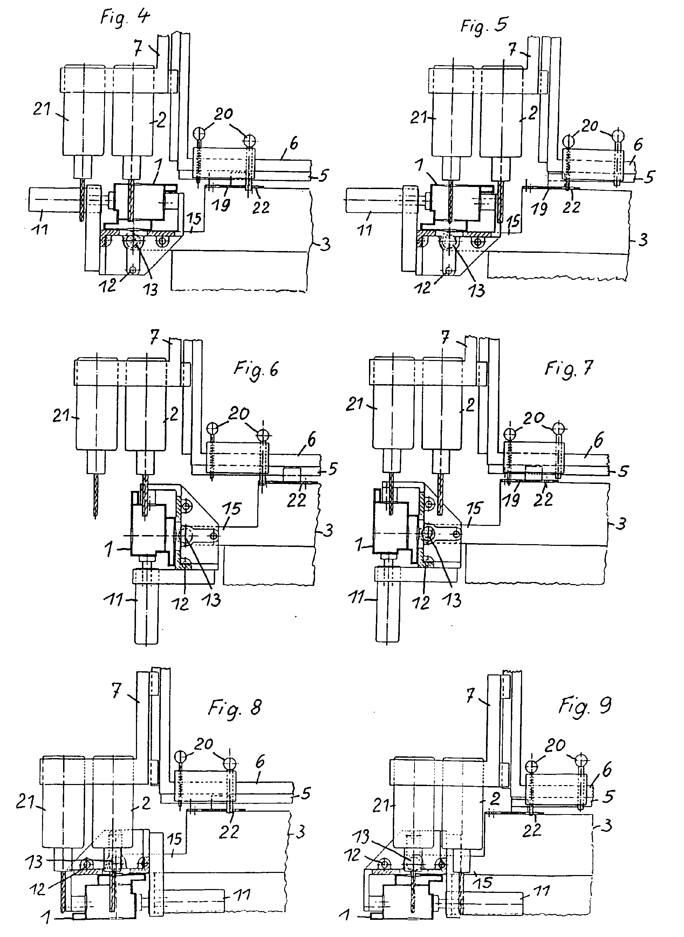

Anhand der Fig. 4 bis 9 ist ein Ablauf einzelner Bearbeitungsschritte mit einer erfindungsgemäßen Vorrichtung näher beschrieben, wobei die Bearbeitung in diesem Beispiel aus dem Einfräsen von Ausnehmungen und dem Bohren von Löchern auf drei Seiten eines Fensterprofils 1 besteht.

In Fig. 4 ist das Profil 1 in einer ersten Stellung eingespannt, wobei die zu bearbeitende Fläche des Profils 1 nach oben, zu den Bearbeitungswerkzeugen 2 und 21 hin, gerichtet ist. Das Spannelement 10 mit Werkzeug 11 befindet sich oberhalb der Schwenkachse 13 am Haltearm 15. Von den beiden an den Supporten 6 und 7 gehaltenen Bearbeitungseinheiten Fräser 2 und Bohrer 21 taucht der Fräser 2 gerade in das Profil 1 ein, um einen Durchbruch zu erzeugen, dessen Abmessungen der rechte Kopierstift 20 aus der Schablone 19 vorgibt.

Fig. 5 zeigt den zweiten Bearbeitungsschritt. Das Profil bleibt in derselben Stellung wie in Fig. 4, allerdings werden nun mit dem zweiten Bearbeitungswerkzeug 21, dem Bohrer, Löcher an gewünschten Stellen eingebracht. Dazu tastet der linke Kopierstift in die Schablone 19 und der Bohrer 21 taucht in das Profil 1.

Fig. 6 zeigt den dritten Schritt. Nachdem die obere Seitenwand des Hohlprofils 1 bearbeitet ist, wird der Bohrer 21 in seine Ausgangsstellung angehoben und das aufgespannte Profil 1 entweder mechanisch oder per Hand um 90° in die in Figur 6 gezeigte Schwenkstellung geschwenkt. Daraufhin erfolgt die Bearbeitung der zweiten Seitenfläche des Hohlprofils 1. Das Spannelement 10 mit Spannwerkzeug 11 befindet sich nun um 90° gedreht links von der Schwenkachse 13 am Haltearm 15. Von den beiden an den Supporten 6 und 7 gehaltenen Bearbeitungseinheiten Fräser 2 und Bohrer 21 taucht der Fräser 2 gerade in das Profil 1 ein, um auf der entsprechenden Seite des Profils 1 einen Durchbruch zu erzeugen, dessen Abmessungen wiederum der rechte Kopierstift 20 aus der Schablone 19 vorgibt.

Fig. 7 zeigt den vierten Schritt. Das Profil bleibt in derselben Stellung wie in Fig. 6, allerdings werden nun mit dem zweiten Bearbeitungswerkzeug 21, dem Bohrer, Löcher an gewünschten Stellen eingebracht. Dazu tastet der linke Kopierstift in die Schablone 19 und der Bohrer 21 taucht in das Profil 1.

Fig. 8 zeigt den fünften Schritt, Fräsen auf der dritten Seite. Nachdem die zweite Seite des Hohlprofils 1 bearbeitet ist, wird der Bohrer 21 in seine Ausgangsstellung angehoben und das aufgespannte Profil 1 entweder mechanisch oder per Hand nochmals um weitere 90° in die in Figur 8 gezeigte Schwenkstellung weitergeschwenkt. Das Spannelement 10 mit Spannwerkzeug 11 befindet sich nun unter der Schwenkachse 13 am Haltearm 15. Von den beiden an den Supporten 6 und 7 gehaltenen Bearbeitungseinheiten Fräser 2 und Bohrer 21 taucht der Fräser 2 gerade in das Profil 1 ein, um auf der entsprechenden Seite einen Durchbruch zu erzeugen, dessen Abmessungen wiederum der rechte Kopierstift 20 aus der Schablone 19 vorgibt.

Durch die erfindungsgemäße Anordnung des Schwenkachse 13 unter dem Profil 1 liegt dieses bezüglich der Schablone 19 nun wieder genau auf derselben Bearbeitungsachse mit gleichem seitlichen Abstand wie in Fig. 4, die die Bearbeitung der gegenüberliegenden Seite zeigte. Es kann dieselbe Aussparung 22 der Schablone 19 verwendet werden, wodurch eine identische Ausnehmung auf der selben Achse erfolgt. Ergebnis ist eine von vorne bis hinten sauber verlaufende, vorsprungfreie Ausnehmung, in die zum Beispiel das Schloß ohne Klemmen einschiebbar ist.

Fig. 9 zeigt den sechsten Schritt. Das Profil bleibt in derselben Stellung wie in Fig. 8, allerdings werden nun mit dem zweiten Bearbeitungswerkzeug 21, dem Bohrer, Löcher an gewünschten Stellen eingebracht. Dazu tastet der linke Kopierstift in die Schablone 19 und der Bohrer 21 taucht in das Profil 1. In dieser dritten Schwenkstellung wird die dritte Seitenwand des Hohlprofils 1 in der schon beschriebenen Weise bearbeitet.

Anschließend wird die Aufspanneinrichtung 8 mit den einzelnen Spannelementen 10 wieder in die in Fig. 4 gezeigte Ausgangsstellung zurückgeschwenkt. Nach dem Lösen der Spannzylinder 11 kann das fertig bearbeitete Hohlprofil 1 herausgenommen werden.

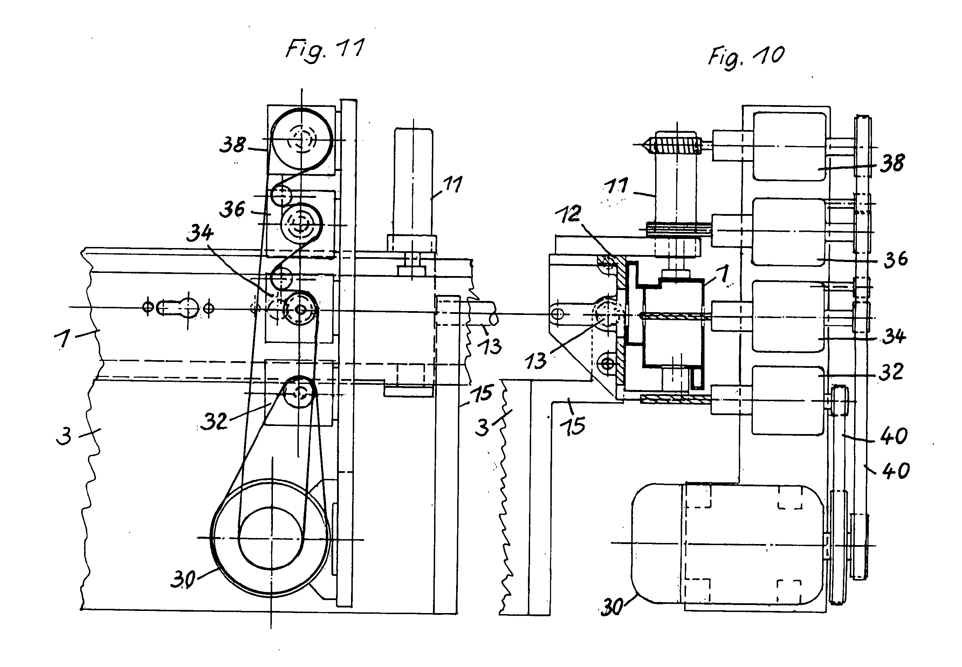

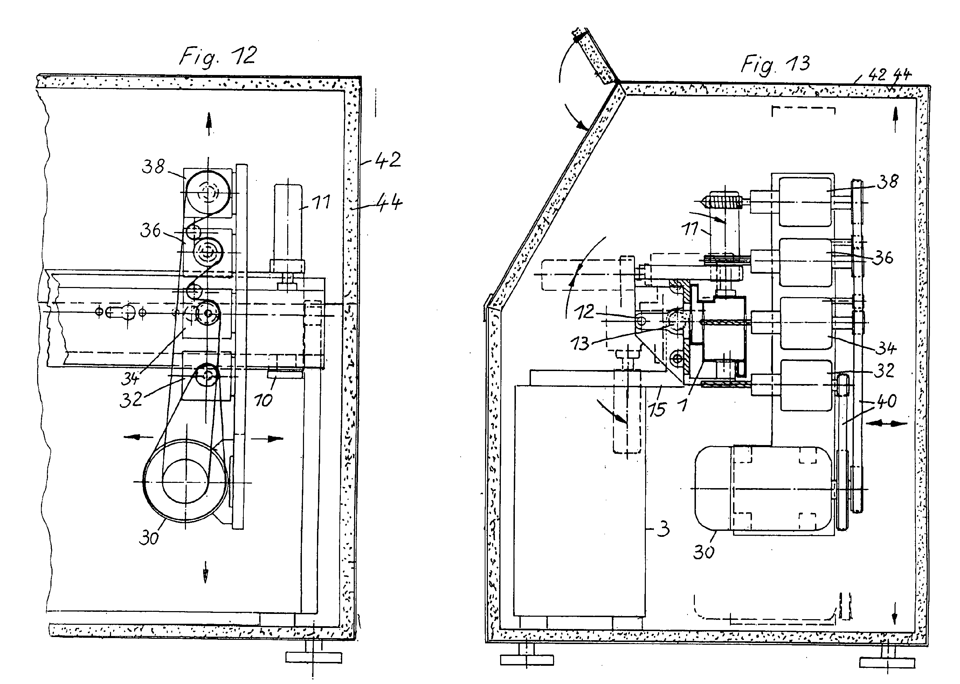

Während die zuvor beschriebene Vorrichtung mit zwei Bearbeitungseinheiten 2 und 21 insbesondere für eine manuelle Betätigung zum Verfahren der Bearbeitungswerkzeuge ausgebildet ist, ist in Fig. 10 und 11 eine weitere Ausführung einer erfindungsgemäßen Vorrichtung dargestellt mit vier Bearbeitungseinheiten, nämlich Fräser 32, Bohrer 34, Reibahle 36 und Gewindebohrer 38, die alle gemeinsam an einem Arm befestigt und vorzugsweise mittels einer Mehrachssteuerung an die gewünschte Position verfahrbar sind. Der die Bearbeitungseinheiten tragende Arm verläuft in den Fig. 10 und 11 von oben nach unten, also senkrecht zur Profilachse. Wie oben beschrieben, sind sie gemeinsam Richtung Profil 1 bewegbar, wobei natürlich wegen des Abstandes, der erfindungsgemäß größer ist als die Profilbreite, jeweils nur ein Werkzeug in das Profil 1 eintaucht und die anderen daneben "vorbei"-fahren und das Werkstück nicht beschädigen.

Die vier Bearbeitungseinheiten werden bei dem hier gewählten Ausführungsbeispiel von Riemen 40 durch einen gemeinsamen Antrieb, einem Elektromotor 30, angetrieben. Die zwei Riementriebe auf der Antriebswelle des Motors 30 und die unterschiedlichen Größen der Antriebs- und Abtriebsscheiben sorgen für die gewünschten Drehzahlen der unterschiedlichen Geräte 32 bis 38, Umlenkrollen für die gewünschte Spannung der Riemen 40.

Unterschiedlich zu den Ausführungen der Fig. 1 bis 9 ist auch, dass die Bearbeitungsachsen in den Fig. 10 und 11 horizontal statt vertikal verlaufen. Die Riemen liegen damit nicht auf den Seiten der Bordscheiben auf, wodurch der Verschleiß wesentlich minimiert wird.

Die Fig. 12 und 13 zeigen eine weitere Ausführung der erfindungsgemäßen Vorrichtung, wobei hier wiederum ein Motor 30 vier Bearbeitungswerkzeuge (zum Beispiel Fräser 32, Bohrer 34, Reibahle 36 und Gewindebohrer 38) über einen Riementrieb 40 antreibt. Alle vier Bearbeitungswerkzeuge 32 bis 38 sind an einem vertikal ausgerichteten Arm übereinander angeordnet und sind in die gleiche Bearbeitungsrichtung horizontal ausgerichtet, was zu einer nur geringen Belastung des Zahnriemenantriebs 40 führt. Der Wechsel zwischen den einzelnen Werkzeugen erfolgt einfach durch Herausfahren des einen Werkzeugs aus dem Profil 1 und Eintauchen des nächsten, in den Fig. 12 und 13 des Bohrers 34, in das Profil 1. Ein Umspannen des Profils 1 oder der Werkzeuge ist so nicht notwendig. Eine Kapselung der gesamten Maschine ist durch das umfassende Gehäuse 42 mit der "Rundum"-Schalldämmung 44 erreicht. Durch die erfindungsgemäße Bauart werden ein kompakter Aufbau und eine verdrehbare Kapselung der Maschine erreicht.

Bei der Anordnung von vier Bearbeitungswerkzeugen (32 bis 38) und einem Verfahrweg von 600 mm lassen sich in diesem Beispiel Profilbreiten bis rund 150 mm, bei der Anordnung von drei Bearbeitungswerkzeugen (32 bis 38) und einem Verfahrweg von 600 mm mit entsprechender Beabstandung sogar Profilbreiten bis 200 mm bearbeiten.

In Fig. 13 sind durch Doppelpfeile die Verschwenkmöglichkeiten des vom Spannwerkzeug 11 aufgespannten Profilstücks 1 und die Verfahrwege der Werkzeuge in Längs- und Querrichtung sowie in der Höhe durch Pfeile angedeutet. Das Profilstück 1 ist in drei um je 90° versetzten Stellungen fixierbar, wobei die beiden um 180° entgegengesetzten Stellungen koaxial liegen, wodurch Durchbrüche von beiden Seiten aus exakt fluchtend eingebracht werden können.

### Bezugszeichenliste

- 1: Hohlprofil
- 2: Bearbeitungseinheit, Fräskopf
- 3: Maschinengestell
- 4: Fräsbank
- 5: Längssupport
- 6: Quersupport
- 7: Tiefensupport
- 8: Aufspanneinrichtung
- 9: Schiene
- 10: Spannelement
- 11: Spannwerkzeug
- 12: Rastscheibe
- 13: Schwenkachse
- 14: Konsole
- 15: Haltearm
- 18: Aussparung
- 19: Schablone
- 20: Kopierstift
- 21: Bohrer
- 22: Aussparung
- 26: Betätigungshebel
- 28: Betätigungshebel
- 30: Antrieb
- 32: Betätigungswerkzeug
- 34: Betätigungswerkzeug
- 36: Betätigungswerkzeug
- 38: Betätigungswerkzeug
- 40: Riemen
- 42: Gehäuse
- 44: Schalldämmung

## Patentansprüche

1. Vorrichtung zum mehrseitigen Bearbeiten von Hohlprofilen (1) oder dergleichen stabförmigen Werkstücken mittels wenigstens einer an einem Maschinengestell (3) verfahrbaren Bearbeitungseinheit (2), mit einer in dem Maschinengestell (3) gelagerten Aufspanneinrichtung (8) für das zu bearbeitende Hohlprofil (1), wobei gegebenenfalls die Aufspanneinrichtung (8) um eine parallel zur Längsachse des Hohlprofils (1) verlaufende Drehachse (13) drehbar gelagert ist, **dadurch gekennzeichnet, dass** zwei oder mehr Bearbeitungswerkzeuge (2, 21, 32, 34, 36, 38) in einem seitlichen Abstand neben- oder übereinander angeordnet sind, der so groß ist, dass beim Eintauchen eines Werkzeugs (2, 21, 32, 34, 36, 38) in das Hohlprofil (1) die übrigen Werkzeuge (2, 21, 32, 34, 36, 38) das Hohlprofil (1) nicht berühren.

2. Vorrichtung nach Anspruch 1, **dadurch gekennzeichnet, dass** der Abstand größer ist als die Profilbreite des Hohlprofils (1).

3. Vorrichtung nach Anspruch 1 oder Anspruch 2, **gekennzeichnet durch** einen gemeinsamen Träger für die Bearbeitungswerkzeuge (2, 21, 32, 34, 36, 38).

4. Vorrichtung nach einem der vorhergehenden Ansprüche, **dadurch gekennzeichnet, dass** die Achsen der Bearbeitungswerkzeuge (2, 21, 32, 34, 36, 38) horizontal und in einer Reihe übereinander ausgerichtet sind.

5. Vorrichtung nach einem der vorhergehenden Ansprüche, **dadurch gekennzeichnet, dass** ein einzähliger Antrieb (30) für die mehreren Bearbeitungswerkzeuge (32, 34, 36, 38) vorgesehen ist, der diese über einen oder mehrere Riemen (40) oder dergleichen antreibt.

6. Vorrichtung nach Anspruch 5, **dadurch gekennzeichnet, daß** die für die jeweilige Werkzeugwelle der Bearbeitungswerkzeuge (32, 34, 36, 38) erforderliche Drehzahl durch Auswahl des Umfangsdurchmessers der jeweils zugeordneten Antriebs- beziehungsweise Abtriebsscheiben eingestellt ist.

7. Vorrichtung nach dem Oberbegriff des Anspruchs 1, **dadurch gekennzeichnet, dass** die Schwenkachse (13) der Aufspanneinrichtung (8) in mindestens zwei um 180° gegeneinander verdrehten Schwenklagen arretierbar und so angeordnet ist, dass das Hohlprofil (1) in den beiden um 180° gegeneinander verdrehten Schwenklagen in der gleichen Bearbeitungsachse liegt.

8. Vorrichtung nach Anspruch 7, **gekennzeichnet durch** eine Schablone (19), die das Fräsbild für das Drückerloch und die Ausnehmung für den Profilzylinder sowie für die Befestigungsbohrungen enthält.

9. Vorrichtung nach einem der vorhergehenden Ansprüche, **dadurch gekennzeichnet, dass** dem jeweiligen Bearbeitungswerkzeug (32, 34, 36, 38) in der Schablone (19) eine Justierbohrung für einen Kopierstift (20) zum Ausrichten der Bearbeitungsachse des jeweiligen Bearbeitungswerkzeuges (32, 34, 36, 38) auf die Schwenkachse (13) der Aufspanneinrichtung (8) zugeordnet ist.

10. Vorrichtung nach einem der vorhergehenden Ansprüche, **dadurch gekennzeichnet, dass** die Aufspanneinrichtung (8) mindestens eine Raststellung für eine Schrägstellung des Hohlprofils (1) aufweist.

11. Vorrichtung nach einem der vorhergehenden Ansprüche, **gekennzeichnet durch** eine schalldämmende Kapselung (42, 44) der gesamten Vorrichtung mit Abmessungen für das Verfahren der Bearbeitungswerkzeuge (2, 21, 32, 34, 36, 38).
